# EUROPÄISCHE PATENTANMELDUNG

(11) **EP 3 222 860 A1**
(43) Veröffentlichungstag der Anmeldung: **27.09.2017**
(21) Anmeldenummer: 17160460.6
(22) Anmeldetag: 13.03.2017
(51) Int. Cl.: F16B 31/02, F16B 33/00

(54) **ABSCHERSCHRAUBE FÜR ARBEITEN UNTER SPANNUNG**

(30) Priorität: 22.03.2016 DE 102016105310
(71) Anmelder: Arcus Elektrotechnik Alois Schiffmann GmbH, 81673 München (DE)
(72) Erfinder: Klehe, Volker, 85630 Grasbrunn (DE); Niklis, Christian, 82065 Baierbrunn (DE)
(74) Vertreter: Sajda, Wolf E.

(57) **Zusammenfassung**

Die Erfindung betrifft eine Abscherschraube (1) für Arbeiten unter Spannung. Die Abscherschraube (1) weist einen zylindrischen Körper (2), ein Isolierelement (4) und einen Abscherschraubenkopf (5) auf. Der zylindrische Körper (2) ist zumindest bereichsweise mit einem Außengewinde (3) versehen. Der Abscherschraubenkopf (5) weist mindestens eine Sollbruchstelle (6) auf, welche eine Scherebene bildet. Das Isolierelement (4) ist aus einem elektrisch isolierenden Material gebildet und verbindet den zylindrischen Körper (2) mit dem Abscherschraubenkopf (5) derart, dass im verbundenen Zustand der Abscherschraubenkopf (5) über das Isolierelement (4) von dem zylindrischen Körper (2) elektrisch isoliert ist.

## Beschreibung

Die vorliegende Erfindung betrifft eine Abscherschraube für Arbeiten unter Spannung.

Abscherschrauben, deren Schraubenkopf über eine Sollbruchstelle mit einem zylindrischen Körper der Abscherschraube verbunden ist, sind zumindest dem Prinzip nach aus dem Stand der Technik bekannt und werden beispielsweise bei Schraubverbindern oder Kabelverbindungsklemmen verwendet, um elektrische Kabelleiter anzuschließen. In diesem Zusammenhang kommt es darauf an, die Leiterenden mit einem vorgegebenen Anpressdruck zu kontaktieren, um eine einwandfreie mechanische und elektrische Verbindung zu gewährleisten.

In diesem Zusammenhang sind Abscherschrauben gut geeignet, da sie sich auf vorgegebene Abscher- und Drehmomente einstellen lassen. Das Abreißen des Schraubenkopfes bzw. des proximalen Endbereiches der Abscherschraube gewährleistet dann, dass die Abscherschraube mit dem vorgegebenen Drehmoment angezogen worden ist und damit den gewünschten Kontaktdruck erzeugt. Zugleich wird dabei zuverlässig vermieden, dass eine solche Abscherschraube zu stark angezogen wird und möglicherweise das Leiterende eines Kabelleiters zerquetscht oder beschädigt.

Eine solche herkömmliche Bauform einer Abscherschraube ist beispielsweise aus der Druckschrift DE 41 13 242 C2 bekannt und weist einen Gewindekörper mit einem Außengewinde sowie einem Abreißkopf mit Angriffsflächen für ein Werkzeug auf, wobei zwischen dem Gewindekörper und Abreißkopf ein Übergangsbereich vorgesehen ist, dessen Außendurchmesser sich vom Abreißkopf zum Gewindekörper hin verjüngt und eine Sollbruchstelle aufweist. Im Gebrauch wird eine derartige Abscherschraube in das Innengewinde eines Werkstücks, beispielsweise eines Schraubverbinders, eingesetzt, um darin einen elektrischen Leiter festzuklemmen.

Der Abscherschraube kommt in diesem Zusammenhang häufig eine Doppelfunktion zu, denn neben dem Festklemmen des elektrischen Leiters dient in der Regel die Abscherschraube auch dazu, zumindest bereichsweise zumindest einen Teil des von dem elektrischen Leiter bereitgestellten Stromes auf einen anderen, ebenfalls von dem Schraubverbinder festgeklemmten elektrischen Leiter zu übertragen. Demnach hat eine solche Abscherschraube häufig neben ihrer mechanischen Funktion (Festklemmen) noch eine elektrische Funktion (Stromübertragung).

Wenn dann die Schraube angezogen und das vorgegebene maximale Drehmoment überschritten wird, reißt der Abreißkopf der Abscherschraube ab, während der übrige Teil der Abscherschraube in dem Schraubverbinder verbleibt und somit den Leiter mit der vorgegebenen Anpresskraft festlegt.

Eine derartige Abscherschraube ist somit recht wirkungsvoll im praktischen Einsatz, denn ein Monteur kann unabhängig von langjähriger Erfahrung und der Wahl des verwendeten Werkzeugs sicherstellen, dass die Abscherschraube ordnungsgemäß angezogen wird. Er braucht lediglich mit dem entsprechenden Werkzeug, welches zum Kopf der Abscherschraube passt, die Abscherschraube anziehen, bis der Abreißkopf abgeschert ist.

Die aus dem Stand der Technik bekannten und vorstehend beschriebenen Abscherschrauben weisen den Nachteil auf, dass bei diesen Schrauben keine Schutzvorkehrungen berücksichtigt sind, um das Risiko einer Körperdurchströmung oder das Risiko des Ausbildens eines Störlichtbogens zu mindern, wenn die Abscherschrauben unter Spannung zu montieren sind. Als Arbeiten unter Spannung (AuS) wird das Arbeiten an unter Spannung stehenden elektrischen Betriebsmitteln mit Betriebsspannungen über 120 Volt Gleichspannung und 50 Volt Wechselspannung bezeichnet.

Üblicherweise erfordert das Arbeiten unter Spannung besonders geschulte Mitarbeiter (in Deutschland ausgebildete Elektrofachkräfte, in der Schweiz speziell dafür ausgebildete Elektromonteure), besondere Arbeitsmittel (isolierendes Werkzeug) und in manchen Ländern besondere organisatorische Maßnahmen. Montagearbeiten unter Spannung an Niederspannungsanlagen unterscheiden sich insofern von anderen Arbeiten, als die ausführende Person unter Spannung stehende Teile berühren und dabei eine Körperdurchströmung oder einen Störlichtbogen verursachen kann.

Ein Vorteil der Arbeit unter Spannung ist die Vermeidung von Betriebsunterbrechungen. Dies rechtfertigt in vielen Fällen, vor allem wenn keine Ersatzkapazitäten vorhanden sind, die aufwändigen Vorsichtsmaßnahmen gegenüber einer Abschaltung.

Die Aufgabe der vorliegenden Erfindung besteht darin, eine Abscherschraube der zuvor beschriebenen Art dahingehend weiterzubilden, dass diese sich für Montagearbeiten unter Spannung an Niederspannungsanlagen eignet, wobei die Schraube selber so konzipiert ist, dass das Risiko einer Körperdurchströmung und/oder das Risiko des Ausbildens eines Störlichtbogens verringert wird, wenn die ausführende Person die Abscherschraube berührt bzw. installiert. Insbesondere soll eine Abscherschraube angegeben werden, welche wirkungsvoll die Sicherheit des Monteurs während der Montage der Schraube unter Spannung an Niederspannungsanlagen erhöht.

Diese Aufgabe wird durch den Gegenstand des unabhängigen Patentanspruches 1 gelöst, wobei vorteilhafte Weiterbildungen der Erfindung in den abhängigen Ansprüchen angegeben sind.

Daher wird gemäß der Erfindung eine Abscherschraube für Arbeiten unter Spannung angegeben, wobei die Abscherschraube einen zylindrischen Körper, ein Isolierelement aus einem elektrisch isolierenden Material, und einen Abscherschraubenkopf mit mindestens einer eine Scherebene bildenden Sollbruchstelle aufweist. Wie auch bei herkömmlichen, aus dem Stand der Technik bekannten Abscherschrauben ist bei der erfindungsgemäßen Abscherschraube der zylindrische Körper zumindest bereichsweise mit einem Außengewinde versehen, damit die Abscherschraube in das Innengewinde eines Werkstückes, beispielsweise eines Schraubverbinders, eingeschraubt werden kann.

Erfindungsgemäß ist insbesondere vorgesehen, dass einerseits der zylindrische Körper und das Isolierelement der Abscherschraube und andererseits das Isolierelement und der Abscherschraubenkopf der Abscherschraube jeweils derart miteinander verbunden oder verbindbar sind, dass im verbundenen Zustand der Abscherschraubenkopf über das Isolierelement von dem zylindrischen Körper elektrisch isoliert ist.

Daher kann mit einer solchen Abscherschraube das Risiko einer Körperdurchströmung und/oder das Ausbilden eines Störlichtbogens bei der Montage der Abscherschraube unter Spannung verringert werden, da die Abscherschraube selber die erforderliche Isolierung und den Berührungsschutz bereitstellt, so dass die elektrischen Gefahren der Körperdurchströmung oder Störlichtbogenausbildung in vorteilhafter Weise ausgeschlossen werden.

Bei einer bevorzugten Realisierung der erfindungsgemäßen Abscherschraube sind der zylindrische Körper und das Isolierelement der Abscherschraube über einen Formschluss vorzugsweise lösbar miteinander verbunden oder verbindbar. Denkbar wäre es beispielsweise in diesem Zusammenhang, wenn der zylindrische Körper der Abscherschraube an oder in seinem proximalen Endbereich Angriffsflächen aufweist, mit denen entsprechende, komplementär ausgeführte Angriffsflächen des Isolierelements formschlüssig zusammenwirken bzw. zusammenwirkbar sind.

Insbesondere bietet es sich in diesem Zusammenhang an, wenn der proximale Endbereich des zylindrischen Körpers der Abscherschraube zumindest bereichsweise als aufnehmendes Teil ausgebildet und das Isolierelement der Abscherschraube als Isolierbuchse ausgeführt und so ausgebildet ist, dass es zumindest bereichsweise in dem aufnehmenden Teil des zylindrischen Körpers aufgenommen werden kann.

Alternativ oder zusätzlich hierzu ist es denkbar, wenn das Isolierelement und der Abscherschraubenkopf der Abscherschraube ebenfalls über einen Formschluss vorzugsweise lösbar miteinander verbunden oder verbindbar sind. Denkbar in diesem Zusammenhang wäre es beispielsweise, wenn der Abscherschraubenkopf an oder in seinem distalen Endbereich Angriffsflächen aufweist, mit denen entsprechende, komplementär ausgeführte Angriffsflächen des Isolierelements formschlüssig zusammenwirken.

Wenn - wie bereits ausgeführt - das Isolierelement als Isolierbuchse ausgeführt ist, bietet es sich an, wenn das als Isolierbuchse ausgeführte Isolierelement ferner dazu ausgebildet ist, zumindest bereichsweise den distalen Endbereich des Abscherschraubenkopfes aufzunehmen, während gleichzeitig der proximale Endbereich des zylindrischen Körpers der Abscherschraube zumindest bereichsweise als aufnehmendes Teil ausgebildet ist und dazu dient, zumindest bereichsweise das als Isolierbuchse ausgeführte Isolierelement aufzunehmen.

In einer bevorzugten Weiterbildung der zuletzt genannten Ausführungsformen ist vorgesehen, dass der als aufnehmendes Teil ausgebildete proximale Endbereich des zylindrischen Körpers Angriffsflächen aufweist, mit denen in der Außenmantelfläche des als Isolierbuchse ausgeführten Isolierelements ausgebildete Angriffsflächen formschlüssig zusammenwirken.

Insbesondere ist es in diesem Zusammenhang bevorzugt, wenn der als aufnehmendes Teil ausgebildete proximale Endbereich des zylindrischen Körpers zumindest bereichsweise als axial eingearbeiteter, zentraler Innenkant ausgeführt ist, wobei das als Isolierbuchse ausgeführte Isolierelement einen entsprechenden, komplementär hierzu ausgeführten, zentralen Außenkant aufweist.

Um die Bedienbarkeit der Abscherschraube zu erhöhen, und um insbesondere zu verhindern, dass sich versehentlich während oder vor der Montage das Isolierelement von dem zylindrischen Körper der Abscherschraube löst, ist es denkbar, dass zwischen dem als aufnehmendes Teil ausgebildeten proximalen Endbereich des zylindrischen Körpers der Abscherschraube und dem als Isolierbuchse ausgeführten Isolierelement der Abscherschraube zumindest bereichsweise eine Adhäsionsschicht vorgesehen ist, um dadurch das Isolierelement an dem zylindrischen Körper zu fixieren.

Alternativ oder zusätzlich hierzu ist es aber auch denkbar, dass das Isolierelement über eine Presspassung mit dem proximalen Endbereich des zylindrischen Körpers verbunden wird.

Bei einer bevorzugten Realisierung der erfindungsgemäßen Abscherschraube ist das Isolierelement als Isolierbuchse ausgeführt und dazu ausgebildet, zumindest bereichsweise zumindest den distalen Endbereich des Abscherschraubenkopfes aufzunehmen. Hierbei ist es ferner von Vorteil, wenn das als Isolierbuchse ausgeführte Isolierelement einen axial eingearbeiteten, zentralen Innenkant aufweist, mit dem ein am distalen Endbereich des Abscherschraubenkopfes axial ausgebildeter, zentraler Außenkant formschlüssig zusammenwirkt.

Bei der erfindungsgemäßen Abscherschraube dient das Isolierelement dazu, ein an dem Abscherschraubenkopf angreifendes Drehmoment auf den zylindrischen Körper zu übertragen. Vorzugsweise ist das Isolierelement dabei dazu ausgebildet, ein zur insbesondere vollständigen Montage der Abscherschraube notwendiges Drehmoment auf den zylindrischen Körper zu übertragen. Um dies erreichen zu können, ist das Isolierelement aus Herstellungskostengründen vorzugsweise als Spritzgussteil ausgebildet, da ein als entsprechendes Frästeil ausgebildetes Isolierelement, welches für eine derartige Drehmomentübertragung geeignet wäre, in der Regel relativ aufwendig zu fertigen ist.

Vorzugsweise besteht das als Spritzgussteil ausgebildete Isolierelement aus einem Kunststoff, insbesondere aus faserverstärktem Polyamid. Selbstverständlich kommen hier aber auch andere gleichwirkende Kunststoffmaterialien in Frage.

Bei einer bevorzugten Weiterbildung der erfindungsgemäßen Abscherschraube dient das Isolierelement ferner dazu, im fertig montierten Zustand der Abscherschraube, das heißt dann, wenn diese in ein Innengewinde eines Werkstückes, beispielsweise eines Schraubverbinders, eingeschraubt und der Abscherschraubenkopf abgeschert ist, einen Berührschutz auszubilden. Zu diesem weist das Isolierelement einen die proximale Stirnseite des zylindrischen Körpers vorzugsweise vollständig überdeckenden Randbereich auf, welcher dann im abgescherten Zustand der Abscherschraube den Berührschutz darstellt.

Im Hinblick auf den Abscherschraubenkopf ist es von Vorteil, wenn dieser einen proximalen Endbereich mit Angriffsflächen für ein Eintreib- oder Antriebswerkzeug aufweist. Insbesondere bietet es sich hierbei an, wenn der proximale Endbereich des Abscherschraubenkopfes einen axial ausgebildeten, zentralen Außen- oder Innenkant aufweist.

Im Hinblick auf die mindestens eine Sollbruchstelle des Abscherschraubenkopfes ist es von Vorteil, wenn diese in einem Übergangsbereich zwischen dem distalen Endbereich und dem proximalen Endbereich des Abscherschraubenkopfes ausgebildet ist, damit im abgescherten Zustand möglichst kein Bereich nach außen übersteht.

Schließlich ist gemäß einem weiteren Aspekt der vorliegenden Erfindung vorgesehen, dass der Abscherschraubenkopf als Mehrfach-Abscherschraubenkopf ausgebildet ist und mindestens zwei jeweils eine Scherebene bildende Sollbruchstellen aufweist, die axial voneinander getrennt jeweils in dem zylindrischen Körper des Abscherschraubenkopfes ausgebildet sind.

Die Erfindung wird nachstehend, auch hinsichtlich weiterer Merkmale und Vorteile, anhand der Beschreibung eines Ausführungsbeispiels und unter Bezugnahme auf die beiliegenden Zeichnungen näher erläutert.

Die Zeichnungen zeigen in
- FIG. 1: eine isometrische Ansicht einer exemplarischen Ausführungsform der erfindungsgemäßen Abscherschraube;
- FIG. 2: schematisch eine Seitenansicht der in FIG. 1 gezeigten exemplarischen Ausführungsform der erfindungsgemäßen Abscherschraube;
- FIG. 3A: schematisch eine Schnittansicht der Abscherschraube gemäß FIG. 2 entlang der Linie A-A;
- FIG. 3B: schematisch eine Schnittansicht der Abscherschraube gemäß FIG. 2 entlang der Linie B-B;
- FIG. 4: eine isometrische Ansicht des zylindrischen Körpers der exemplarischen Ausführungsform der erfindungsgemäßen Abscherschraube gemäß FIG. 1;
- FIG. 5: eine isometrische Ansicht des Isolierelements der exemplarischen Ausführungsform der erfindungsgemäßen Abscherschraube gemäß FIG. 1; und
- FIG. 6: eine isometrische Ansicht des Abscherschraubenkopfes der exemplarischen Ausführungsform der erfindungsgemäßen Abscherschraube gemäß FIG. 1.

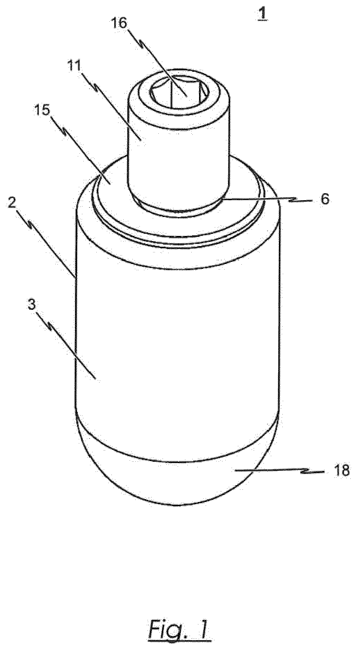

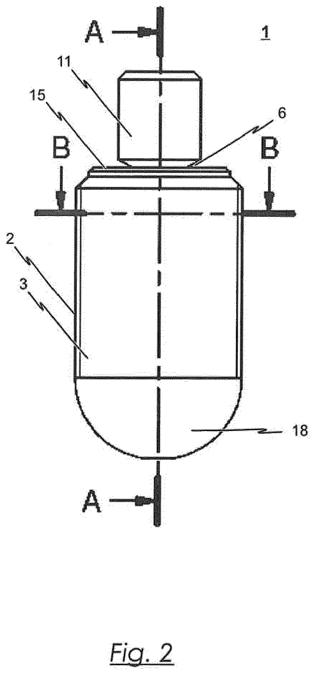

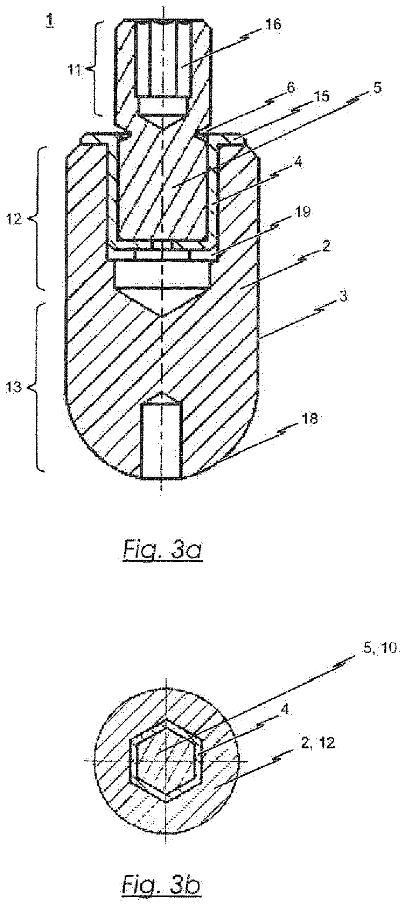

FIG. 1 zeigt schematisch in einer isometrischen Darstellung eine exemplarische Ausführungsform der erfindungsgemäßen Abscherschraube 1. In FIG. 2 ist die exemplarische Ausführungsform der erfindungsgemäßen Abscherschraube 1 in einer Seitenansicht gezeigt, während FIG. 3A eine Schnittansicht entlang der Linie A-A in FIG. 2 und FIG. 3B eine Schnittansicht entlang der Linie B-B in FIG. 2 darstellen.

Anhand dieser Darstellungen ist erkennbar, dass die exemplarische Ausführungsform der erfindungsgemäßen Abscherschraube 1 im Wesentlichen dreistückig aufgebaut ist und einen zylindrischen Körper 2, ein Isolierelement 4 sowie einen Abscherschraubenkopf 5 aufweist. An der Außenmantelfläche des zylindrischen Körpers 2 ist zumindest bereichsweise ein Außengewinde 3 ausgebildet, damit die Abscherschraube 1 in das Innengewinde eines entsprechenden, nicht dargestellten Werkstückes eingeschraubt werden kann.

Des Weiteren ist insbesondere auch der Darstellung in FIG. 2 zu entnehmen, dass an einem distalen Endbereich 13 des zylindrischen Körpers 2 eine vorzugsweise ballige Schraubenkuppe 18 ausgebildet ist. Eine derartige Bauform ist besonders geeignet, wenn elektrische Leiter in Schraubverbindern festgeklemmt werden, um die jeweils festzuklemmenden Leiter nicht in unerwünschter Weise zu beschädigen.

Der Schnittansicht in FIG. 3A ist entnehmbar, dass einerseits der zylindrische Körper 2 und das Isolierelement 4 der Abscherschraube 1 und andererseits das Isolierelement 4 und der Abscherschraubenkopf 5 der Abscherschraube 1 jeweils derart miteinander verbunden sind, dass in dem verbundenen Zustand der Abscherschraubenkopf 5 über das Isolierelement 4 von dem zylindrischen Körper 2 isoliert ist. Da das Isolierelement 4 aus einem elektrisch isolierenden Material besteht, ist somit der Abscherschraubenkopf 5 über das Isolierelement 4 elektrisch von dem zylindrischen Körper 2 isoliert.

Diese elektrische Isolation ermöglicht es, dass die Abscherschraube unter Spannung montiert werden kann, weil mit einer solchen Abscherschraube das Risiko einer Körperdurchströmung und/oder das Ausbilden eines Störlichtbogens in vorteilhafter Weise verringert werden kann, so dass die elektrischen Gefahren der Körperdurchströmung oder Störlichtbogenbildung durch das Isolierelement 4 ausgeschlossen sind.

Das Isolierelement 4 dient nicht nur dazu, den zylindrischen Körper 2 der Abscherschraube 1 elektrisch von dem Abscherschraubenkopf 5 zu isolieren, sondern insbesondere auch dazu, beim Montieren der Abscherschraube 1 ein an dem Abscherschraubenkopf 5 angreifendes Drehmoment auf den zylindrischen Körper 2 zu übertragen.

Mit anderen Worten, das Isolierelement 4 muss dazu ausgebildet sein, das bei der Montage der Abscherschraube 1 notwendige Drehmoment von dem Abscherschraubenkopf 5 auf den zylindrischen Körper zu übertragen, ohne dass dabei die elektrische Isolierung zwischen dem Abscherschraubenkopf 5 und dem zylindrischen Körper 2 beeinträchtigt oder aufgehoben wird, beispielsweise indem das Material des Isolierelements 4 nachgibt, so dass zumindest bereichsweise ein elektrischer Kontakt zwischen dem zylindrischen Körper 2 und dem Abscherschraubenkopf 5 möglich wäre.

Vorzugsweise ist daher das Isolierelement 4 als Spritzgussteil ausgebildet und besteht aus einem faserverstärkten Polyamid, wobei allerdings auch andere Kunststoffmaterialien in Frage kommen.

Der Schnittansicht in FIG. 3A ist ferner zu entnehmen, dass das Isolierelement 4 einen die proximale Stirnseite des zylindrischen Körpers 2 vorzugsweise vollständig überdeckenden Randbereich 15 aufweist. Dieser Randbereich 15 dient als Berührschutz im montierten Zustand der Abscherschraube 1, das heißt dann, wenn der Abscherschraubenkopf 5 an seiner mindestens einen Sollbruchstelle 6 abgeschert ist.

Um eine Drehmomentübertragung von dem Abscherschraubenkopf 5 auf den zylindrischen Körper 2 bei der bzw. während der Montage der Abscherschraube 1 zu ermöglichen, wirkt das Isolierelement 4 über eine formschlüssige Verbindung mit dem zylindrischen Körper 2 einerseits und dem Abscherschraubenkopf 5 andererseits zusammen.

Bei der in den Zeichnungen dargestellten exemplarischen Ausführungsform der erfindungsgemäßen Abscherschraube 1 ist - wie es insbesondere der Schnittansicht in FIG. 3B entnommen werden kann - vorgesehen, dass der proximale Endbereich 12 des zylindrischen Körpers 2 zumindest bereichsweise als aufnehmendes Teil ausgebildet ist, indem das als Isolierbuchse ausgeführte Isolierelement 4 zumindest bereichsweise aufgenommen ist.

Im Einzelnen weist bei der in den Zeichnungen dargestellten exemplarischen Ausführungsform der erfindungsgemäßen Abscherschraube 1 der als aufnehmendes Teil ausgebildete proximale Endbereich 12 des zylindrischen Körpers 2 Angriffsflächen 7 auf, mit denen in der Außenmantelfläche des als Isolierbuchse ausgeführten Isolierelements 4 ausgebildete erste Angriffsflächen 8 des Isolierelements 4 formschlüssig zusammenwirken.

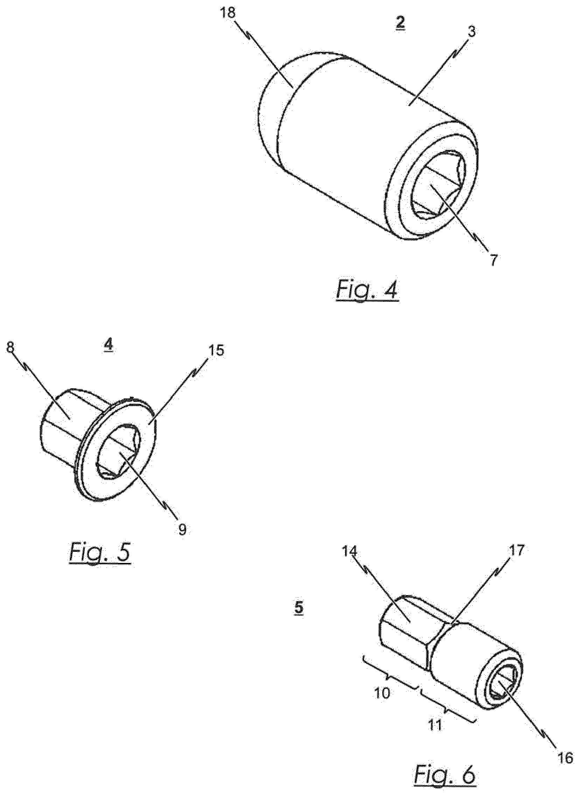

Wie es den isometrischen Einzeldarstellungen des zylindrischen Körpers 2 gemäß FIG. 4 und des als Isolierbuchse ausgeführten Isolierelements 4 gemäß FIG. 5 entnommen werden kann, ist bei der exemplarischen Ausführungsform der als aufnehmendes Teil ausgebildete proximale Endbereich 12 des zylindrischen Körpers 2 zumindest bereichsweise als axial eingearbeiteter, zentraler Innenkant ausgebildet, wobei das als Isolierbuchse ausgeführte Isolierelement 4 einen axial ausgebildeten zentralen Außenkant aufweist.

Auf diese Weise ist das Isolierelement 4 vorzugsweise über eine Presspassung formschlüssig mit dem proximalen Endbereich 12 des zylindrischen Körpers 2 verbindbar.

Wie es der Schnittansicht gemäß FIG. 3 entnommen werden kann, ist es in diesem Zusammenhang ferner denkbar, dass zwischen dem als aufnehmendes Teil ausgebildeten proximalen Endbereich 12 des zylindrischen Körpers 2 und dem als Isolierbuchse ausgeführten Isolierelement 4 zumindest bereichsweise eine Adhäsionsschicht 19 vorgesehen ist, um das als Isolierbuchse ausgeführte Isolierelement 4 zusätzlich an dem zylindrischen Körper 2 zu fixieren.

Eine derartige Adhäsionsschicht 19 ist jedoch rein optional, da zwischen dem Außenkant des Isolierelements 4 und dem Innenkant des proximalen Endbereiches 12 des zylindrischen Körpers 2 in der Regel eine hinreichend feste Presspassung bereitgestellt wird.

Andererseits ist auch der distale Endbereich 10 des Abscherschraubenkopfes 5 formschlüssig mit dem Isolierelement 4 verbunden bzw. verbindbar. Im Einzelnen ist - wie es der Darstellung in FIG. 3A entnommen werden kann - bei der exemplarischen Ausführungsform der erfindungsgemäßen Abscherschraube 1 das als Isolierbuchse ausgeführte Isolierelement 4 derart ausgebildet, dass es zumindest bereichsweise zumindest den distalen Endbereich 10 des Abscherschraubenkopfes aufnimmt.

Zu diesem Zweck ist bei der exemplarischen Ausführungsform vorgesehen, dass das als Isolierbuchse ausgeführte Isolierelement 4 einen axial eingearbeiteten, zentralen Innenkant 9 aufweist, mit dem ein am distalen Endbereich 10 des Abscherschraubenkopfes 5 axial ausgebildeter zentraler Außenkant formschlüssig zusammenwirkt.

Der Innenkant 9 des als Isolierbuchse ausgeführten Isolierelements 4 ist insbesondere der isometrischen Einzeldarstellung in FIG. 5 entnehmbar, während der Außenkant des Abscherschraubenkopfes 5 der isometrischen Einzeldarstellung in FIG. 6 entnommen werden kann.

Um zu erreichen, dass der Abscherschraubenkopf nach dem Installieren der Abscherschraube 1, und insbesondere bei Anwendung eines vorab festgelegten Drehmoments zuverlässig abschert, weist der Abscherschraubenkopf 5 mindestens eine Sollbruchstelle 6 auf, welche eine Scherebene bildet. Wie es insbesondere den Darstellungen in den FIGs. 3A und 6 entnommen werden kann, ist diese Sollbruchstelle 6 in einem Übergangsbereich 17 zwischen dem distalen Endbereich 10 des Abscherschraubenkopfes 5 und dem proximalen Endbereich 11 des Abscherschraubenkopfes 5 vorgesehen.

In diesem Zusammenhang ist es denkbar, dass die Sollbruchstelle 6 insbesondere in Form eines radialen Einstiches in dem Übergangsbereich 17 derart ausgebildet ist, dass der Übergangsbereich 17 im Bereich der Sollbruchstelle 6 eine mehrkantförmige Querschnittsfläche aufweist, wobei allerdings auch runde oder ovale bzw. abgerundete Querschnittsflächen grundsätzlich denkbar sind.

Auch ist es in diesem Zusammenhang denkbar, dass der Abscherschraubenkopf 5 als Mehrfach-Abscherschraubenkopf ausgebildet und mindestens zwei jeweils eine Scherebene bildende Sollbruchstellen aufweist, die axial voneinander getrennt jeweils in dem zylindrischen Körper des Abscherschraubenkopfes 5 ausgebildet sind.

Den Darstellungen in den FIGs. 1 und 6 ist ferner zu entnehmen, dass der Abscherschraubenkopf 5 einen proximalen Endbereich 11 mit Angriffsflächen 16 für ein Eintreib- oder Antriebswerkzeug aufweist. Im Einzelnen ist bei der in den Zeichnungen dargestellten exemplarischen Ausführungsform der erfindungsgemäßen Abscherschraube 1 vorgesehen, dass der proximale Endbereich 11 des Abscherschraubenkopfes 5 einen axial eingearbeiteten, zentralen Innenkant aufweist. Zusätzlich oder alternativ hierzu ist es aber auch möglich, dass der proximale Endbereich 11 des Abscherschraubenkopfes 5 einen axial ausgebildeten, zentralen Außenkant mit entsprechenden Angriffsflächen 16 für ein Eintreib- oder Antriebswerkzeug aufweist.

### Bezugszeichenliste

- 1: Abscherschraube
- 2: zylindrischer Körper
- 3: Außengewinde des zylindrischen Körpers
- 4: Isolierelement
- 5: Abscherschraubenkopf
- 6: Sollbruchstelle des Abscherschraubenkopfes
- 7: Angriffsflächen des zylindrischen Körpers
- 8: erste Angriffsflächen des Isolierelements/Außenkant
- 9: zweite Angriffsflächen des Isolierelements/Innenkant
- 10: distaler Endbereich des Abscherschraubenkopfes
- 11: proximaler Endbereich des Abscherschraubenkopfes
- 12: proximaler Endbereich des zylindrischen Körpers
- 13: distaler Endbereich des zylindrischen Körpers
- 14: Angriffsflächen des Abscherschraubenkopfes am distalen Endbereich
- 15: Randbereich des Isolierelements
- 16: Angriffsflächen des Abscherschraubenkopfes am proximalen Endbereich
- 17: Übergangsbereich des Abscherschraubenkopfes
- 18: Schraubenkuppe
- 19: Adhäsionsschicht

## Patentansprüche

1. Abscherschraube (1) für Arbeiten unter Spannung,
wobei die Abscherschraube (1) Folgendes aufweist:
- einen zylindrischen Körper (2), der zumindest bereichsweise mit einem Außengewinde (3) versehen ist;
- ein Isolierelement (4) aus einem elektrisch isolierenden Material; und
- einen Abscherschraubenkopf (5) mit mindestens einer Sollbruchstelle (6), die eine Scherebene bildet,
wobei der zylindrische Körper (2) und das Isolierelement (4) einerseits und das Isolierelement (4) und der Abscherschraubenkopf (5) andererseits jeweils derart miteinander verbunden oder verbindbar sind, dass im verbundenen Zustand der Abscherschraubenkopf (5) über das Isolierelement (4) von dem zylindrischen Körper (2) elektrisch isoliert ist.

2. Abscherschraube (1) nach Anspruch 1,
wobei der zylindrische Körper (2) und das Isolierelement (4) über einen Formschluss vorzugsweise lösbar miteinander verbunden oder verbindbar sind; und/oder
wobei das Isolierelement (4) und der Abscherschraubenkopf (5) über einen Formschluss vorzugsweise lösbar miteinander verbunden oder verbindbar sind.

3. Abscherschraube (1) nach Anspruch 1 oder 2,
wobei der zylindrische Körper (2) an oder in seinem proximalen Endbereich (12) Angriffsflächen (7) aufweist, mit denen entsprechend komplementär ausgeführte erste Angriffsflächen (8) des Isolierelements (4) formschlüssig zusammenwirken; und/oder
wobei der Abscherschraubenkopf (5) an oder in seinem distalen Endbereich (10) Angriffsflächen (14) aufweist, mit denen entsprechend komplementär ausgeführte zweite Angriffsflächen (9) des Isolierelements (4) formschlüssig zusammenwirken.

4. Abscherschraube (1) nach einem der Ansprüche 1 bis 3,
wobei das Isolierelement (4) als Isolierbuchse ausgeführt und dazu ausgebildet ist, zumindest bereichsweise den distalen Endbereich (10) des Abscherschraubenkopfes (5) aufzunehmen, und
wobei der proximale Endbereich (12) des zylindrischen Körpers (2) zumindest bereichsweise als aufnehmendes Teil ausgebildet ist zum zumindest bereichsweisen Aufnehmen des als Isolierbuchse ausgeführten Isolierelements (4).

5. Abscherschraube (1) nach Anspruch 4,
wobei der als aufnehmendes Teil ausgebildete proximale Endbereich (12) des zylindrischen Körpers (2) Angriffsflächen (7) aufweist, mit denen in der Außenmantelfläche des als Isolierbuchse ausgeführten Isolierelements (4) ausgebildete erste Angriffsflächen (8) in formschlüssigen Eingriff bringbar sind.

6. Abscherschraube (1) nach Anspruch 4 oder 5,
wobei der als aufnehmendes Teil ausgebildete proximale Endbereich (12) des zylindrischen Körpers (2) zumindest bereichsweise als axial eingearbeiteter, zentraler Innenkant ausgebildet ist, und wobei das als Isolierbuchse ausgeführte Isolierelement (4) einen axial ausgebildeten zentralen Außenkant aufweist.

7. Abscherschraube (1) nach einem der Ansprüche 4 bis 6,
wobei zwischen dem als aufnehmendes Teil ausgebildeten proximalen Endbereich (12) des zylindrischen Körpers (2) und dem als Isolierbuchse ausgeführten Isolierelement (4) zumindest bereichsweise eine Adhäsionsschicht vorgesehen ist zum Fixieren des als Isolierbuchse ausgeführten Isolierelements (4) an dem zylindrischen Körper (2).

8. Abscherschraube (1) nach einem der Ansprüche 4 bis 7,
wobei das Isolierelement (4) über eine Presspassung mit dem proximalen Endbereich (12) des zylindrischen Körpers (2) verbunden oder verbindbar ist.

9. Abscherschraube (1) nach einem der Ansprüche 1 bis 8,
wobei das Isolierelement (4) als Isolierbuchse ausgeführt und dazu ausgebildet ist, zumindest bereichsweise zumindest den distalen Endbereich (10) des Abscherschraubenkopfes (5) aufzunehmen.

10. Abscherschraube (1) nach Anspruch 9,
wobei das als Isolierbuchse ausgeführte Isolierelement (4) einen axial eingearbeiteten, zentralen Innenkant aufweist, mit dem ein am distalen Endbereich (10) des Abscherschraubenkopfes (5) axial ausgebildeter, zentraler Außenkant in formschlüssigen Eingriff bringbar ist.

11. Abscherschraube (1) nach einem der Ansprüche 1 bis 10,
wobei das Isolierelement (4) dazu ausgebildet ist, ein an dem Abscherschraubenkopf (5) angreifendes und zur vorzugsweise vollständigen Montage der Abscherschraube notwendiges Drehmoment auf den zylindrischen Körper (2) zu übertragen.

12. Abscherschraube (1) nach einem der Ansprüche 1 bis 11,
wobei das Isolierelement (4) ein Spritzguss- oder Frästeil ist, vorzugsweise aus faserverstärktem Polyamid.

13. Abscherschraube (1) nach einem der Ansprüche 1 bis 12,
wobei das Isolierelement (4) einen die proximale Stirnseite des zylindrischen Körpers (2) vorzugsweise vollständig überdeckenden Randbereich (15) aufweist zum Ausbilden eines Berührschutzes im abgescherten Zustand der Abscherschraube (1).

14. Abscherschraube (1) nach einem der Ansprüche 1 bis 13,
wobei der Abscherschraubenkopf (5) einen proximalen Endbereich (11) mit Angriffsflächen (16) für ein Eintreib- oder Antriebswerkzeug aufweist.

15. Abscherschraube (1) nach Anspruch 14,
wobei der proximale Endbereich (11) des Abscherschraubenkopfes (5) einen axial ausgebildeten, zentralen Außenkant aufweist.

16. Abscherschraube (1) nach einem der Ansprüche 1 bis 15,
wobei die mindestens eine Sollbruchstelle (6) in einem Übergangsbereich (17) zwischen dem distalen Endbereich (10) und dem proximalen Endbereich (11) des Abscherschraubenkopfes (5) ausgebildet ist.

17. Abscherschraube (1) nach einem der Ansprüche 1 bis 16,
wobei der Abscherschraubenkopf (5) als Mehrfach-Abscherschraubenkopf ausgebildet ist und mindestens zwei jeweils eine Scherebene bildende Sollbruchstellen aufweist, die axial voneinander getrennt jeweils in dem zylindrischen Körper des Abscherschraubenkopfes (5) ausgebildet sind.

18. Abscherschraube (1) nach Anspruch 17,
wobei die mindestens zwei Sollbruchstellen axial voneinander getrennt jeweils derart in dem zylindrischen Körper des Abscherschraubenkopfes (5) ausgebildet sind, dass der zylindrische Körper des Abscherschraubenkopfes im Bereich von vorzugsweise einer jeden Sollbruchstelle eine mehrkantförmige Querschnittsfläche aufweist.

19. Abscherschraube (1) nach Anspruch 17 oder 18,
wobei die mindestens zwei Sollbruchstellen derart ausgebildet sind, dass der Abscherschraubenkopf (5) an den von ihnen gebildeten Scherebenen bei Drehmomenten abreißt, die von dem distalen Endbereich (10) des Abscherschraubenkopfes zu seinem proximalen Endbereich (11) schrittweise zunehmen oder abnehmen.
